# FASCICULE DE BREVET EUROPEEN

(11) **EP 1 195 316 B1**
(45) Date de publication et mention de la délivrance du brevet: **28.12.2005**
(21) Numéro de dépôt: 01490039.3
(22) Date de dépôt: 03.10.2001
(51) Int. Cl.: B62D 25/14

(54) **Tableau de bord destiné à être monté dans l'habitacle d'un véhicule et carrosserie de véhicule équipée d'un tel tableau de bord**
Armaturenträger für Kraftfahrzeug, und Kraftfahrzeug mit derartigen Armaturenträger
Vehicle dashboard, and vehicle equipped with such a dashboard

(30) Priorité: 06.10.2000 FR 0012822
(43) Date de publication de la demande: 10.04.2002
(73) Titulaire: Visteon Global Technologies, Inc., Dearborn, Michigan 48126 (US)
(72) Inventeur: Berteaux, Hervé, c/o Visteon Systèmes Intérieurs, 62440 Harnes (FR); Schlachter, Mickael., c/o Visteon Syst. Intérieurs, 62440 Harnes (FR); Dauvergne, Jean, c/o Visteon Systèmes Intérieurs, 62440 Harnes (FR)
(74) Mandataire: Duthoit, Michel Georges André

(56) Documents cités:
- EP-A- 0 456 531
- FR-A- 2 799 718
- GB-A- 2 329 363
- GB-A- 2 340 453
- US-A- 6 073 987

## Description

L'invention concerne un tableau de bord destiné à être monté dans l'habitacle d'un véhicule ainsi qu'une carrosserie de véhicule équipée d'un tel tableau de bord. Elle est destinée, notamment, aux véhicules automobiles.

Actuellement, pour monter un tableau de bord dans l'habitacle d'un véhicule, il est connu d'assembler préalablement tout ou partie des éléments constitutifs du tableau de bord afin d'installer celui-ci en un minimum d'opérations.

Il est ainsi connu de fixer préalablement différents éléments d'équipement, sur au moins un élément support, tel qu'une traverse.

Cela étant, des parties de certains de ces éléments d'équipement doivent passer et/ou affleurer à l'extérieur de l'habitacle, notamment dans le compartiment moteur. Il s'agit, par exemple, de conduits du dispositif de chauffage, ventilation et/ou conditionnement d'air, de l'arbre de direction et/ou autres.

A cette fin, la paroi de séparation entre l'habitacle et le compartiment moteur est munie d'ouvertures de passage pour chacune des parties des éléments d'équipement devant déboucher et/ou affleurer dans le compartiment moteur, ces ouvertures étant de section la plus réduite possible afin de limiter les phénomènes de pont thermique et/ou phonique, voir à ce sujet l'exposé du document EP-A-0456531.

On conçoit que de telles caractéristiques entraînent des difficultés d'assemblage du tableau de bord sur le véhicule puisqu'il est non seulement nécessaire de le positionner pour sa fixation mais encore vis-à-vis des ouvertures de passage.

Le but de la présente invention est de proposer un tableau de bord destiné à être monté dans l'habitacle d'un véhicule, ainsi qu'une carrosserie de véhicule, qui pallient les inconvénients précités et permettent de faciliter leur montage.

D'autres buts et avantages de l'invention apparaîtront au cours de la description qui va suivre qui n'est donnée qu'à titre indicatif et qui n'a pas pour but de la limiter.

L'invention concerne tout d'abord un tableau de bord, destiné à être monté dans l'habitable d'un véhicule, notamment automobile, comprenant un ou plusieurs éléments d'équipement, et au moins un élément support du ou desdits éléments d'équipement, ce ou ces derniers présentant au moins une première partie assujettie audit ou auxdits éléments supports et une seconde partie, dite libre, destinée à affleurer et/ou à venir en saillie hors de l'habitacle, caractérisé par le fait qu'il comprend en outre des moyens de positionnement de ladite partie libre du ou desdits éléments d'équipement par rapport audit ou auxdits éléments supports.

L'invention concerne également une carrosserie de véhicule, notamment automobile, constituée d'une armature, destinée à définir au moins l'habitacle et le compartiment moteur dudit véhicule, ladite carrosserie comprenant une paroi de séparation entre ledit compartiment moteur et ledit habitacle et un tableau de bord tel que défini plus haut, positionné en vis-à-vis de ladite paroi de séparation.

L'invention sera mieux comprise à la lecture de la description suivante, accompagnée des dessins en annexe qui en font partie intégrante et parmi lesquels :
- la figure 1 est une vue éclatée illustrant en perspective un exemple de réalisation du tableau de bord conforme à l'invention,
- la figure 2 est une vue en perspective illustrant de façon assemblée le tableau de bord de la figure 1, selon un angle de vue différent,
- la figure 3 est une vue de coupe selon le plan transversal dont la trace verticale est repérée III-III à la figure 1,
- la figure 4 est une vue de coupe selon le plan transversal dont la trace verticale est repérée IV-IV à la figure 1,
- la figure 5 est une vue de coupe selon un plan transversal dont la trace verticale est repérée V-V à la figure 1,
- la figure 6 est une vue de coupe selon un plan transversal dont la trace verticale est repérée VI-VI à la figure 1 précédente,
- la figure 7 illustre en perspective, de manière partielle et simplifiée un exemple de réalisation du tableau de bord et de la carrosserie de véhicule conforme à l'invention, prêts à être montés l'un sur l'autre.

L'invention concerne tout d'abord un tableau de bord, destiné à être monté dans l'habitacle d'un véhicule, notamment automobile.

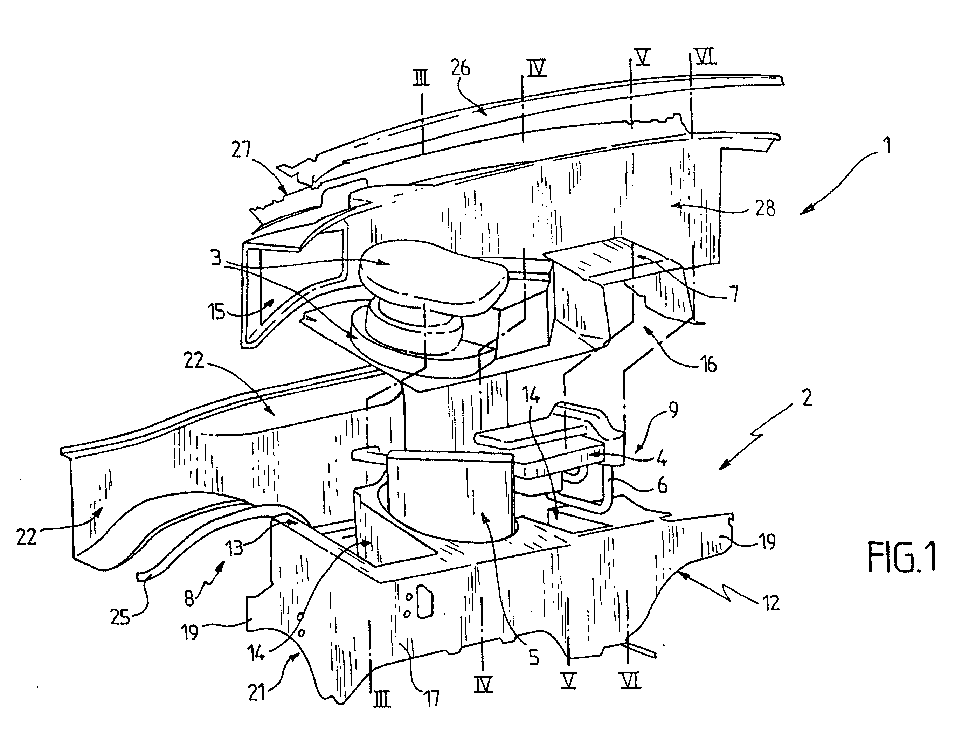

Comme illustré aux figures 1 à 6, ledit tableau de bord 1 comprend un ou plusieurs éléments d'équipement 2. Il pourra s'agir, par exemple, d'un dispositif de ventilation, chauffage et/ou de conditionnement d'air comprenant un ventilateur 3, un radiateur 4, un évaporateur 5, des conduits de circulation d'un fluide caloporteur 6 et/ou un capot de fermeture 7.

Le tableau de bord conforme à l'invention comprend également au moins un élément support 8 du ou desdits éléments d'équipement 2, ce ou ces derniers présentant au moins une première partie 9 assujettie audit ou auxdits éléments supports 8 et une seconde partie 10, dite libre, destinée à affleurer et/ou à venir en saillie hors de l'habitacle.

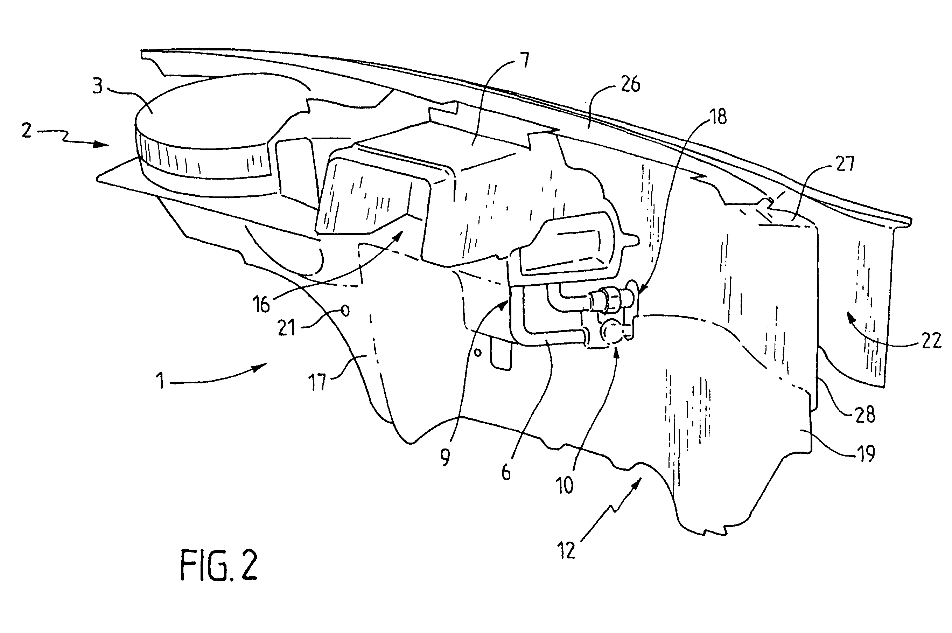

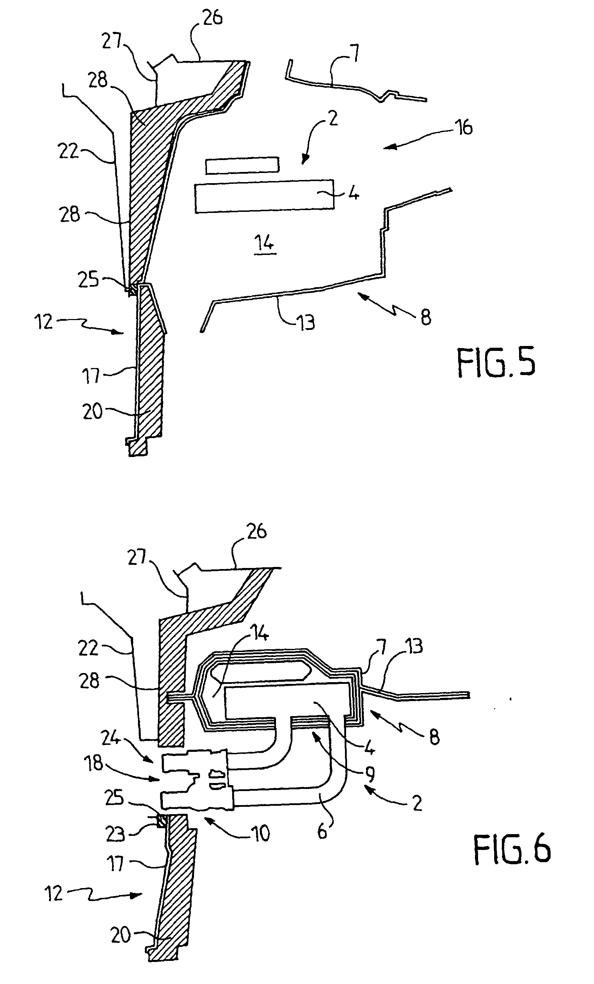

Comme illustré aux figures 2 et 6, dans le dispositif de chauffage, ventilation et/ou conditionnement d'air, ladite partie 10 assujettie audit ou auxdits éléments supports est constituée, par exemple, du ventilateur 3, du radiateur 4, de l'évaporateur 5 et du capot de fermeture 7 tandis que ladite partie libre 10 est constituée notamment, par une première extrémité des conduits 6, leur extrémité opposée étant reliée au radiateur 4.

De manière plus générale, ladite partie libre 10 pourra être constituée de l'extrémité distale d'un composant du ou desdits éléments d'équipement 2, s'étendant longitudinalement, ledit composant étant relié directement ou indirectement audit ou auxdits éléments supports 8 par ailleurs, notamment au voisinage de son extrémité proximale.

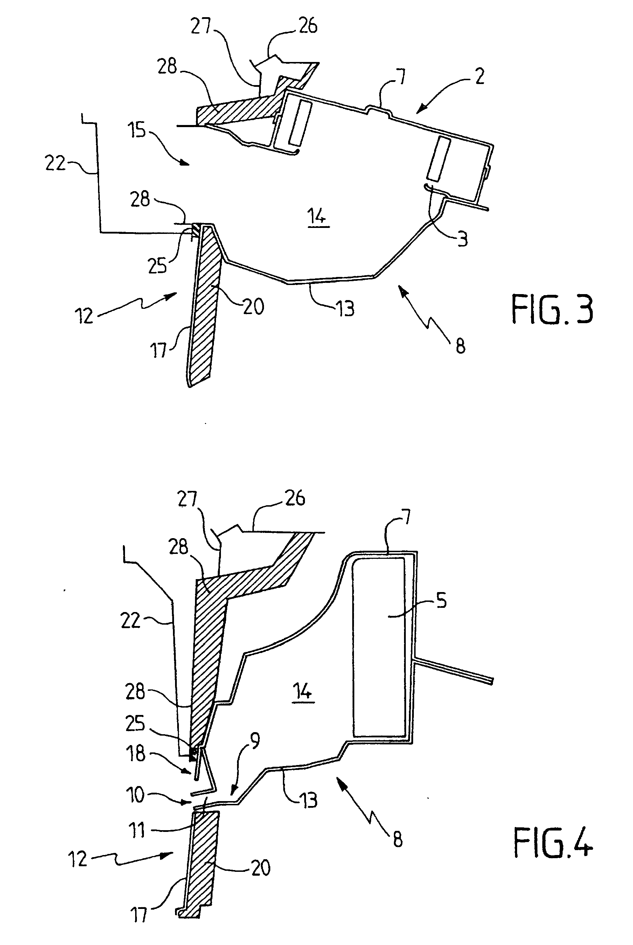

Il pourra ainsi s'agir, notamment, comme illustré à la figure 4, de l'orifice distale d'un conduit 11 d'évacuation des condensats du dispositif de ventilation, chauffage et/ou de conditionnement d'air. Il pourra encore s'agir de la partie distale de l'arbre de direction non représenté, ou autres.

Selon l'invention, ledit tableau de bord comprend en outre des moyens 12 de positionnement de ladite partie libre 10 du ou desdits éléments d'équipement 2 par rapport audit ou auxdits éléments supports 8. La ou lesdites parties libres 10 sont ainsi maintenues en place par rapport au reste du tableau de bord en un emplacement précis facilitant ainsi leur passage à l'extérieur de l'habitacle, par exemple en direction du compartiment moteur du véhicule, sans ajustement supplémentaire de leur positionnement.

Le ou lesdits éléments supports 8 sont constitués, par exemple, d'une traverse 13, s'étendant sensiblement selon une direction, dite transversale, orthogonale à l'axe longitudinal du véhicule.

Comme illustrée, ladite traverse 13 est constituée, notamment, d'un élément sensiblement planiforme définissant éventuellement des logements 14 destinés à accueillir au moins en partie le ou lesdits éléments d'équipement 2, par exemple, le ventilateur 3, le radiateur 4 et l'évaporateur 5. Ladite traverse 13 peut alors être prévue apte à coopérer avec le capot de fermeture 7 pour définir un bloc fermé dans lequel circule l'air traité par le dispositif de chauffage, ventilation et/ou de conditionnement d'air entre un orifice d'entrée 15 et de sortie 16. Selon un tel mode de réalisation, le ventilateur 3, le radiateur 4 et/ou l'évaporateur 5 pourront être situés sensiblement dans le même plan.

Selon d'autres modes de réalisation, la traverse 13 pourra être tubulaire et définir un conduit de circulation d'air pour le dispositif de ventilation, chauffage et/ou conditionnement. Elle pourra encore s'étendre en volume et présenter alors des réservations réalisées dans la masse pour tout ou partie du ou desdits éléments d'équipement 2.

Naturellement, certaines caractéristiques des différents modes de réalisation de la traverse 13 évoquée plus haut pourraient encore être combinées entre elles.

Lesdits moyens de positionnement 12 sont constitués, par exemple, d'une jupe 17 prolongeant ladite traverse 13, sur une partie au moins de sa longueur, selon une surface donnée destinée à être transversale audit axe longitudinal, ladite jupe 17 étant munie de premiers orifices 18 à travers lesquels lesdites parties libres 10 sont positionnées.

Ladite jupe 17 est destinée, par exemple, à doubler au moins en partie la paroi séparant le compartiment moteur et l'habitacle du véhicule. Elle est orientée, notamment, sensiblement orthogonalement à la direction longitudinale de celui-ci.

Plus précisément, ladite jupe 17 pourra être rendue apte à épouser ladite paroi de séparation. Elle sera ainsi, éventuellement, légèrement arquée.

La dimension de ladite jupe 17 selon ladite direction transversale sera destinée à correspondre, par exemple, à la largeur du véhicule, de façon à constituer un renfort aux chocs latéraux pour celui-ci. Elle est pour cela munie, par exemple, d'ailes 19.

Ladite jupe 17 est revêtue, notamment, d'une couche de matériau insonorisant 20, prévue sur l'une de ses faces, par exemple celle destinée à être orientée vers l'habitacle du véhicule.

Ladite traverse 13 et/ou ladite jupe 17 pourront être munies, par exemple, de seconds orifices 21 destinés à permettre la fixation dudit tableau de bord sur ledit véhicule.

Le tableau de bord conforme à l'invention pourra encore comprendre un bac collecteur 22 s'étendant selon ladite direction transversale. Ledit bac 22 est prolongé d'une paroi 23 doublant localement ladite jupe 17 au niveau de tout ou partie desdits premiers orifices 18. Ladite paroi 23 prolongeant ledit bac est munie de troisièmes orifices 24 en correspondance avec le ou lesdits premiers orifices 18, comme illustré à la figuer 6.

Ledit bac collecteur 22 est muni d'un joint d'étanchéïté 25 coopérant avec ladite jupe 17.

Ledit tableau de bord pourra également comprendre différentes autres pièces destinées à s'étendre transversalement sur toute la largeur du véhicule, au moins pour certaines d'entre elles. Il s'agit, par exemple, d'un élément 26 destiné à venir en vis-à-vis du bord inférieur du pare-brise du véhicule ainsi que sa doublure 27. Il s'agit encore, notamment, d'un élément 28 définissant l'une des faces latérales du bac collecteur, à savoir celle destinée à être orientée côté habitacle.

Naturellement, ledit tableau de bord pourra encore comprendre une coiffe et différents appareillages, non représentés sur les dessins.

L'invention concerne également une carrosserie de véhicule.

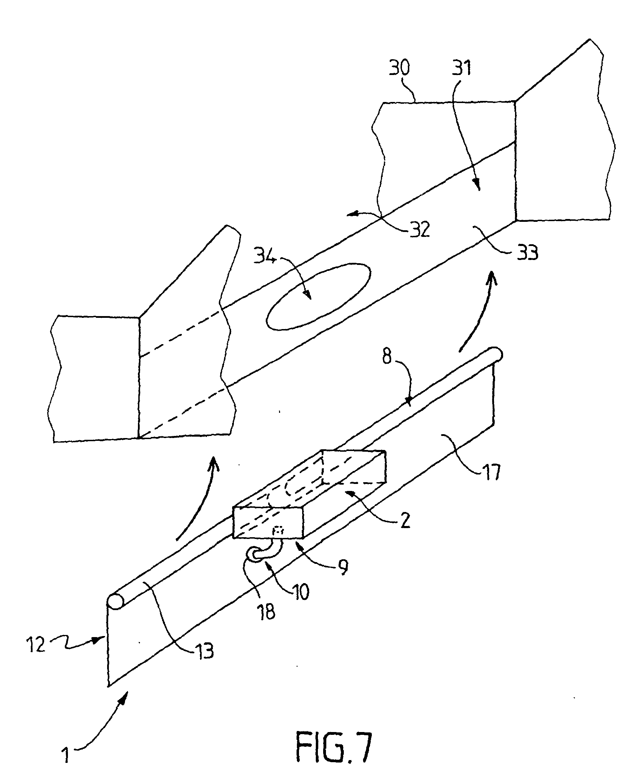

Comme illustrée à la figure 7, ladite carrosserie est constituée d'une armature 30, destinée à définir au moins l'habitacle 31 et le compartiment moteur 32 du véhicule.

Ladite carrosserie 30 comprend une paroi de séparation 33 entre ledit compartiment moteur et ledit habitacle et un tableau de bord 1 tel que décrit plus haut.

Ladite paroi de séparation 33 est munie en vis-à-vis desdits moyens de positionnement 12 d'une ouverture ou d'une pluralité d'ouvertures 34 par exemple de dimension élargie afin de permettre le passage et/ou l'affleurement de la partie libre 10 du ou desdits éléments d'équipement 2, sans avoir à réaliser un ajustement de leur positionnement au montage par rapport à la ou auxdites ouvertures 34.

La ou lesdites ouvertures 34 sont ainsi prévues, notamment, en vis-à-vis de chacun desdits premiers orifices 18, la surface de la ou desdites ouvertures 34 étant très largement supérieure à la surface totale du ou desdits premiers orifices 18 en vis-à-vis desquels elles se trouvent.

Ladite carrosserie pourra aussi comprendre un joint d'étanchéîté, non représenté, entre ladite paroi de séparation 33 et lesdits moyens de positionnement 12, autour de la ou desdites ouvertures 34.

Ledit tableau de bord 1 est assujetti, par exemple, à ladite paroi de séparation 33.

Dans un mode de réalisation préféré, la jupe 17, la traverse 13 et le bac 22 sont réalisés en une seule pièce, par exemple obtenue de moulage. Le matériau utilisé pourra être de l'aluminium, du magnésium ou encore une matière plastique éventuellement renforcée d'un renfort fibreux à haute performance.

Dans un autre mode de réalisation, la jupe 17 et le bac 22 sont réalisés en tôle emboutie, soudés l'un sur l'autre. La traverse 13, moulée ou emboutie, rendu solidaire de l'ensemble jupe 17 et bac 22 par surmoulage d'une matière plastique ne procurant pas de caractéristiques mécaniques particulières. Dans ce mode de réalisation, les logements 14 des éléments d'équipement 2 sont réalisés de moulage, de la même matière et de la même opération de surmoulage.

Naturellement, d'autres modes de mise en oeuvre, à la portée de l'homme de l'art, auraient encore pu être envisagés sans pour autant sortir du cadre de l'invention, tel que défini dans les revendications.

## Revendications

1. Tableau de bord, destiné à être monté dans l'habitacle d'un véhicule, notamment automobile, comprenant un ou plusieurs éléments d'équipement (2), et au moins un élément support (8) du ou desdits éléments d'équipement (2), ce ou ces derniers présentant au moins une première partie (9) assujettie audit ou auxdits éléments supports (8) et une seconde partie (10), dite libre, destinée à affleurer et/ou à venir en saillie hors de l'habitacle, **caractérisé par le fait qu'**il comprend en outre des moyens (12) de positionnement de ladite partie libre (10) du ou desdits éléments d'équipement (2) par rapport audit ou auxdits éléments supports (8).

2. Tableau de bord selon la revendication 1, dans lequel le ou lesdits éléments supports (8) sont constitués d'une traverse (13) s'étendant sensiblement selon une direction, dite transversale, orthogonale à l'axe longitudinal du véhicule et lesdits moyens de positionnement (12) sont constitués d'une jupe (17) prolongeant ladite traverse (13), sur une partie au moins de sa longueur, selon une surface donnée destinée à être transversale audit axe longitudinal, ladite jupe (17) étant munie de premiers orifices (18) à travers lesquels la partie libre (10) du ou desdits éléments d'équipement (2) est positionnée.

3. Tableau de bord selon la revendication 2, dans lequel ladite jupe (17) est apte à épouser la paroi de séparation du compartiment moteur et de l'habitacle du véhicule.

4. Tableau de bord selon la revendication 2, dans lequel ladite jupe (17) présente une dimension, selon ladite direction transversale, destinée à correspondre à la largeur du véhicule, de façon à constituer un renfort aux chocs latéraux pour celui-ci.

5. Tableau de bord selon la revendication 2, dans lequel ladite jupe (17) est revêtue sur l'une de ses faces d'une couche de matériau insonorisant (20).

6. Tableau de bord selon la revendication 2, dans lequel ladite traverse (13) et/ou ladite jupe (17) sont munies de seconds orifices (21) destinés à permettre la fixation dudit tableau de bord sur ledit véhicule.

7. Carrosserie de véhicule, notamment automobile, constituée d'une armature (30) destinée à définir au moins l'habitacle et le compartiment moteur (32) dudit véhicule, ladite carrosserie comprenant une paroi de séparation (33) entre ledit compartiment moteur et ledit habitacle et un tableau de bord (1) selon l'une quelconque des revendications précédentes, positionné en vis-à-vis de ladite paroi de séparation.

8. Carrosserie selon la revendication 7, dans laquelle ladite paroi de séparation (33) est munie en vis-à-vis desdits moyens de positionnement (22) d'une ouverture ou d'une pluralité d'ouvertures (34) de dimension élargie afin de permettre le passage et/ou l'affleurement de la partie libre (10) du ou desdits éléments d'équipement (2), sans avoir à réaliser un ajustement de leur positionnement au montage par rapport à la ou auxdites ouvertures (34).

9. Carrosserie selon la revendication 8, comprenant un joint d'étanchéité entre ladite paroi de séparation (33) et lesdits moyens de positionnement (12), autour de la ou desdites ouvertures (34).

10. Carrosserie selon la revendication 7, dans laquelle ledit tableau de bord (1) est assujetti à ladite paroi de séparation (33).

## Patentansprüche

1. Instrumentenbrett, vorgesehen, um in der Fahrgastzelle eines Fahrzeugs, insbesondere eines Kraftwagens, montiert zu werden, umfassend ein oder mehrere Ausstattungselemente (2) und wenigstens ein Trägerelement (8) des oder der besagten Ausstattungselemente (2), aufweisend dieses Letztere oder diese Letzteren wenigstens einen ersten Teil (9), der an dem oder den besagten Trägerelementen (8) befestigt ist, und einen zweiten Teil (10), der als frei bezeichnet wird, vorgesehen, um auf die gleiche Höhe gebracht zu werden und/oder außerhalb der Fahrgastzelle vorzuspringen, **dadurch gekennzeichnet, daß** es außerdem Mittel (12) zum Positionieren des besagten freien Teils (10) des oder der besagten Ausstattungselemente (2) hinsichtlich des oder der besagten Trägerelemente (8) umfaßt.

2. Instrumentenbrett nach Anspruch 1, bei welchem das oder die besagten Trägerelemente (8) aus einem Querbalken (13) bestehen, der sich im wesentlichen nach einer als senkrecht bezeichneten Richtung erstreckt, die zu der Längsachse des Fahrzeugs rechtwinklig ist, und die besagten Positionierungsmittel (12) aus einem Mantel (17) gebildet sind, verlängernd den besagten Querbalken (13) auf einem Teil wenigstens von seiner Länge nach einer bestimmten Oberfläche, vorgesehen, um zu der besagten Längsachse senkrecht zu sein, wobei der besagte Mantel (17) mit ersten Öffnungen (18) ausgestattet sei, durch die der freie Teil (10) des oder der besagten Ausstattungselemente (2) positioniert ist.

3. Instrumentenbrett nach Anspruch 2, bei welchem der besagte Mantel (17) geeignet ist, um der Wand zum Trennen der Motorabteilung und der Fahrgastzelle des Fahrzeugs in Form zu entsprechen.

4. Instrumentenbrett nach Anspruch 2, bei welchem der besagte Mantel (17) nach der besagten senkrechten Richtung ein Ausmaß aufweist, vorgesehen, um der Breite des Fahrzeugs zu entsprechen, derart, um eine Verstärkung gegen Seitenaufprall für dieses zu bilden.

5. Instrumentenbrett nach Anspruch 2, bei welchem der besagte Mantel (17) auf einer von seinen Seiten mit einer Schicht aus schalldämpfendem Material (20) belegt ist.

6. Instrumentenbrett nach Anspruch 2, bei welchem der besagte Querbalken (13) und/oder der besagte Mantel (17) mit zweiten Öffnungen (21) ausgestattet sind, vorgesehen, um die Befestigung des besagten Instrumentenbrettes am besagten Fahrzeug zu erlauben.

7. Karosserie eines Fahrzeugs, insbesondere eines Kraftwagens, bestehend aus einem Gerüst (30), vorgesehen, um wenigstens die Fahrgastzelle und die Motorabteilung (32) des besagten Fahrzeugs zu bilden, wobei die besagte Karosserie eine Trennungswand (33) zwischen der besagten Motorabteilung und der besagten Fahrgastzelle und ein Instrumentenbrett (1) nach irgendeinem der vorgehenden Ansprüche umfaßt, das der besagten Trennungswand gegenüberliegend positioniert ist.

8. Karosserie nach Anspruch 7, bei welcher die besagte Trennungswand (33), den besagten Mitteln zum Positionieren (22) gegenüberliegend, mit einer Öffnung oder einer Vielzahl von Öffnungen (34) erweiterten Ausmaßes ausgestattet ist, um den Übergang und/oder das Bündigmachen des freien Teiles (10) des oder der besagten Ausstattungselemente (2) zu erlauben, ohne bei der Montage eine Anpassung ihrer Positionierung hinsichtlich der Öffnung oder der besagten Öffnungen (34) durchführen zu müssen.

9. Karosserie nach Anspruch 8, umfassend eine Dichtung zwischen der besagten Trennungswand (33) und den besagten Positionierungsmitteln (12), um die besagte Öffnung oder Öffnungen (34) herum.

10. Karosserie nach Anspruch 7, bei welcher das besagte Instrumentenbrett (1) an der besagten Trennungswand (33) befestigt ist.

## Claims

1. A dashboard, intended to be installed in the interior of a vehicle, in particular an automotive vehicle, comprising one or several equipment elements (2), and at least one supporting element (8) of said equipment element(s) (2), the latter exhibiting at least a first section (9) interconnected with said supporting elements (8) and a second section (10), so-called free section, intended to be flush with and/or to protrude from the interior, **characterised in that** it includes moreover means (12) for positioning said free section (10) of said equipment element(s) (2) relative to said supporting element(s) (8).

2. A dashboard according to claim 1, wherein said supporting element(s) (8) are formed of a crossbeam (13) extending substantially along a direction, so-called transverse direction, perpendicular to the longitudinal axis of the vehicle and said positioning means (12) are formed of a tube (17) extending said crossbeam (13), over a portion at least of its length, along a given surface intended to be transverse to said iongitudinai axis, said tube (17) being fitted with first orifices (18) through which the free section (10) of said equipment element(s) (2) is positioned.

3. A dashboard according to claim 2, wherein said tube (17) is capable of hugging the boundary wall of the engine compartment and of the interior of the vehicle.

4. A dashboard according to claim 2, wherein said tube (17) has a dimension, along said transverse direction, intended to match the width of the vehicle, so as to provide a reinforcement against lateral loads imparted thereto.

5. A dashboard according to claim 2. wherein said tube (17) is coated on one of its faces with a layer of soundproof material (20).

6. A dashboard according to claim 2, wherein said crossbeam (13) and/or said tube (17) are fitted with second orifices (21) enabling to fasten said dashboard to said vehicle.

7. A vehicle body, in particular an automotive body, formed of a armature (30) intended to delineate at least the interior and the engine compartment (32) of said vehicle, said body comprising a boundary wall (33) between said engine compartment and said interior and a dashboard (1) according to any of the previous claims, facing said boundary wall.

8. A body according to claim 7, wherein said boundary wall (33) is fitted, facing said positioning means (22) with an opening or a plurality of openings (34) of increased dimension so as to let through and/or to brush past the free section (10) of said equipment element(s) (2), without needing to adjust the position thereof during assembly relative to said opening(s) (34).

9. A body according to claim 8, comprising a seating joint between said boundary wall (33) and said positioning means (12), around said opening(s) (34).

10. A body according to claim 7, wherein said dashboard (1) is interconnected to said boundary wall (33).
